# EUROPEAN PATENT APPLICATION

(11) **EP 4 834 673 A1**
(43) Date of publication of application: **04.11.2026**
(21) Application number: 25809125.5
(22) Date of filing: 28.04.2025
(51) Int. Cl.: B60R 22/185, B60R 22/42

(54) **LOCKING TONGUE FOR SAFETY BELT AND SAFETY BELT DEVICE**

(30) Priority: 08.05.2024 CN 202410565401
(71) Applicant: Yanfeng International Automotive Technology Co., Ltd., Shanghai 201306 (CN)
(72) Inventor: ZHU, Chenchao, Shanghai 201306 (CN); CHEN, Bin, Shanghai 201306 (CN); HUANG, Yongliang, Shanghai 201306 (CN)
(74) Representative: Botti & Ferrari S.p.A.
(86) International application number: PCT/CN2025/091665
(87) International publication number: WO 2025/232612

(57) **Abstract**

The present disclosure relates to a locking tongue for a seatbelt, the locking tongue comprising a tongue body, the tongue body having a buckle section configured for being inserted into a seat belt buckle and a turning section configured for turning a webbing of the seat belt, the turning section having a through opening for the webbing to pass through, characterized in that a clamping-elastic element is provided on the turning section, the clamping-elastic element being movable between a release position and a clamping position, in the release position the webbing being able to move freely, in the clamping position the webbing being clamped between the clamping-elastic element and a lower surface of the through opening configured for clamping the webbing together with the clamping-elastic element, wherein the clamping-elastic element is configured to be able to reset from the clamping position to the release position through its own resilience force in the unconstrained condition of the webbing. Furthermore, the present disclosure also relates to a seatbelt device comprising such a locking tongue.

## Description

### Technical Field

The present disclosure relates to the technical field of motor vehicle safety, and more specifically, to a locking tongue for a seat belt and a seat belt device comprising such a locking tongue.

### Background of Invention

Currently, three-point seat belts are widely used in vehicles. During the wearing process by an occupant, the webbing of the three-point seat belt can be divided into two parts: a shoulder belt for restraining the upper body of the occupant and a lap belt for restraining the waist of the occupant. A slidable seat belt tongue is provided on the webbing of the seat belt. After the seat belt tongue is inserted into a seat belt buckle and engaged therewith, the restraint function possessed by a general seat belt can be realized to protect the occupant. Ordinary seat belt tongues do not have the ability to lock the webbing, which causes that, in emergency situations such as vehicle collisions, the seat belt tongue cannot provide sufficient friction to prevent the lap belt from being pulled out, affecting the sitting posture of the occupant, and simultaneously causing the displacement of the occupant's hip to be too large and the upper body to lean forward excessively.

In the tongue known from DE102004023394A1, during tightening, the webbing presses against the clamping-elastic element due to the pressure acting on the webbing. The clamping-elastic element is carried by the webbing into the webbing channel due to the friction between the clamping-elastic element and the webbing, until the clamping-elastic element locks the webbing.

In order to reset the clamping-elastic element to the release position after the restraint situation ends so as not to affect the normal use of the tongue, a deflection spring is provided in the tongue known from DE202010013986U1. However, the disadvantage of this solution is that the number of parts is relatively large.

In known tongues, the spring element is integrally formed in one piece on the turning section, making the assembly of the tongue simpler. However, in the prior art, at least one additional spring element is still provided, which loads the clamping element in the release position.

### Summary of Invention

The object of the present disclosure is to propose a locking tongue for a seat belt and a seat belt device comprising such a locking tongue, wherein, compared with the prior art, the locking tongue according to the present application has fewer parts, a simpler structure, and is more lightweight. Furthermore, the clamping and resetting functions can be simultaneously realized by the clamping-elastic element of the locking tongue.

According to a first aspect of the present disclosure, a locking tongue for a seat belt is proposed, the locking tongue comprising a tongue body, the tongue body having a buckle section configured for being inserted into a seat belt buckle and a turning section configured for turning a webbing of the seat belt, the turning section having a through opening for the webbing to pass through, characterized in that a clamping-elastic element is provided on the turning section, the clamping-elastic element being movable between a release position and a clamping position, in the release position the webbing being able to move freely, in the clamping position the webbing being clamped between the clamping-elastic element and a lower surface of the through opening configured for clamping the webbing together with the clamping-elastic element, wherein the clamping-elastic element is configured to be able to reset from the clamping position to the release position through its own resilience force in the unconstrained condition of the webbing.

Compared with solutions in the prior art having two separate, individually arranged clamping elements and elastic elements, the locking tongue according to the present disclosure can clamp and lock the webbing when restraint is required by the clamping-elastic element and perform self-resetting after the restraint situation ends, i.e., simultaneously realizing the clamping and resetting functions. Thus, the same functions as in the prior art can be realized with fewer components, which brings the advantages of fewer parts and significantly reduced weight, i.e., more lightweight. Furthermore, lower manufacturing costs and simpler assembly can also be realized. According to the present disclosure, because the clamping-elastic element is configured to simultaneously have the function of the elastic element, the installation and assembly of an additional elastic element that might otherwise be required are omitted. Compared with the prior art, the locking tongue can realize resetting without the need for additional spring parts.

Generally speaking, seat belt devices are used to protect occupants when a vehicle collides. In a three-point seat belt, when the locking tongue is correctly fixed in the seat belt buckle, protection is provided by the webbing passing across the waist and chest of the occupant. When a collision occurs, the retractor can be locked by, for example, a pretensioner or an inertial mechanism, thereby preventing the webbing from being pulled out. Thus, the webbing can firmly restrain the occupant in the designated position on the seat, which is the desired restraint effect. Generally, in non-collision situations, the webbing can be freely pulled out from the retractor, and the locking tongue can also slide freely on the webbing, and at this time the webbing is in a non-restraint situation.

In some embodiments, the turning section may have a receiving structure for receiving the clamping-elastic element, the receiving structure being configured for enabling the clamping-elastic element to move in a guided manner at the receiving structure, and the receiving structure cooperating with the clamping-elastic element such that the clamping-elastic element resets to the release position in a guided manner based on its own resilience force in the unconstrained condition of the webbing.

In some embodiments, the clamping-elastic element may have a compressible compression structure, the compression structure being configured for generating elastic potential energy due to the compression of the compression structure of the clamping-elastic element by the webbing in the clamping position, such that the clamping-elastic element resets from the clamping position to the release position based on the resilience force caused by the elastic potential energy of the compression structure in the unconstrained condition of the webbing.

In some embodiments, when viewed in a side projection, the receiving structure may have such a cross-sectional geometric shape that cooperates with the cross-sectional geometric shape of the compression structure of the clamping-elastic element such that in the clamping position the clamping-elastic element can on the one hand clamp the webbing and on the other hand generate elastic potential energy for resetting based on the compression of the compression structure. Thus, in the clamping position, the clamping-elastic element has a tendency to reset to the release position, so that in the non-restraint situation of the webbing the clamping-elastic element can reset to the release position based on its resilience force.

In some embodiments, when viewed in a side projection, the compression structure of the clamping-elastic element may have a first surface facing the turning webbing and a second surface facing away from the turning webbing in the installed state, the receiving structure correspondingly having a lower first receiving surface for contacting and cooperating with the first surface and an upper second receiving surface for contacting and cooperating with the second surface, the first receiving surface and the second receiving surface being constructed relative to each other such that the clamping-elastic element will not be stuck in the receiving structure under the action of the resilience force in the clamping position and can reset to the release position in the unconstrained condition of the webbing.

In some embodiments, the second surface of the compression structure of the clamping-elastic element and the second receiving surface of the receiving structure may be configured such that the second surface of the compression structure of the clamping-elastic element can fit against the second receiving surface of the receiving structure and be flat in the fitting region, so that when the clamping-elastic element moves between the release position and the clamping position, the second surface of the compression structure of the clamping-elastic element can slide along the second receiving surface of the receiving structure. In this context, "flat" means having no obvious undulations or concave-convex structures, and said obvious undulations or concave-convex structures would hinder the movement of the clamping-elastic element.

In some embodiments, the first receiving surface may be configured with a curve and the second receiving surface is flat, or both the first receiving surface and the second receiving surface are flat; and/or when viewed in a side projection, the cross-sectional geometric shape of the receiving structure may gradually or stepwise narrow from outside to inside.

In some embodiments, the compression structure of the clamping-elastic element may comprise a front section located at the front and a rear section located at the rear in the insertion direction of the clamping-elastic element, the rear section comprising a first opening portion at a rear end opposite to a front end surface for clamping the webbing, wherein the first opening portion opens substantially outward, wherein the first opening portion is able to be at least partially closed during the movement of the clamping-elastic element from the release position to the clamping position, so that the compression structure of the clamping-elastic element is compressed and thus generates elastic potential energy.

In some embodiments, the compression structure of the clamping-elastic element may be configured to have a V-shaped or C-shaped cross-sectional geometric shape in the release position.

In some embodiments, when viewed in a side projection, the first surface of the compression structure of the clamping-elastic element may be configured to be recessed inwardly toward the interior of the compression structure of the clamping-elastic element with an arcuate shape.

In some embodiments, when viewed in a side projection, the clamping-elastic element may be configured to have an L-shaped cross-sectional contour shape in the release position, the receiving structure correspondingly has an L-shaped cross-sectional shape corresponding to the L-shaped cross-sectional contour shape of the clamping-elastic element and has an inner receiving section and an outer receiving section, wherein, at least in the release position, the front section of the clamping-elastic element is received in the inner receiving section of the receiving structure, and the rear section of the clamping-elastic element is received in the outer receiving section of the receiving structure.

In some embodiments, at the interior of a curved region of the L-shaped cross-sectional shape of the receiving structure, the turning section may have an arched portion, the arched portion being configured to enable the clamping-elastic element to slide on the arched portion with its arcuate first surface when moving between the release position and the clamping position, so that the clamping-elastic element slides into the inner receiving section of the receiving structure when clamping the webbing or slides out of the inner receiving section based on a resilience force in an unconstrained condition of the webbing.

In some embodiments, the first opening portion of the clamping-elastic element may be designed such that, when the clamping-elastic element is subjected to force, the portions at both ends of the first opening portion of the clamping-elastic element abut against each other and thus the first opening portion is completely closed, so that the clamping-elastic element can clamp the webbing at least partially with its front end surface on the one hand, and can remain at least partially in the outer receiving section of the receiving structure with its rear section on the other hand, and when the clamping-elastic element is in an unloaded state, the clamping-elastic element can reset to the release position based on the resilience force in the unconstrained condition of the webbing.

In some embodiments, in the clamping position of the clamping-elastic element, with the first opening portion completely closed, the center of the arcuate section of the compression structure of the clamping-elastic element can extend into the inner receiving section of the receiving structure, and at least a rear portion of the arcuate section of the compression structure of the clamping-elastic element remains in the outer receiving section of the receiving structure.

In some embodiments, the dimensions of the receiving structure in the outer receiving section and the dimensions of the compression structure of the clamping-elastic element in the rear section may be designed such that the clamping-elastic element is received in the receiving structure in a pre-tensioned state in the release position.

In some embodiments, a hook-bent portion may be provided at an outer edge of the receiving structure in the turning section, and two legs of the rear section of the clamping-elastic element can respectively abut against the hook-bent portion in the release position.

In some embodiments, a rod-shaped pin rod may be provided in the turning section, the pin rod being configured to provide support for the compression structure of the clamping-elastic element between the release position and the clamping position, and to limit over-clamping by limiting the position of the compression structure of the clamping-elastic element when the force on the webbing rises excessively.

In some embodiments, the pin rod can be installed through a mounting hole provided at a side edge of the turning section of the tongue body and is in interference fit with the mounting hole.

In some embodiments, the pin rod may have a circular, elliptical, or oval cross-sectional shape.

In some embodiments, the pin rod may be arranged in the turning section such that the compression structure of the clamping-elastic element at least partially rests against the pin rod with its arcuate section in the release position, and thus the pin rod at least partially engages into the arcuate section of the compression structure of the clamping-elastic element.

In some embodiments, the compression structure of the clamping-elastic element may rest against the pin rod with a central portion of its arcuate section in the release position.

In some embodiments, the pin rod may be configured to protrude outward relative to the first receiving surface of the receiving structure when viewed in a side projection, such that, with the pin rod, the clamping-elastic element reaches its clamping position earlier than without the pin rod.

In some embodiments, the clamping-elastic element may be made of metal or plastic with spring elasticity.

In some embodiments, an additional elastic member may be provided inside the clamping-elastic element to increase the elasticity of the clamping-elastic element.

In some embodiments, the cross-sectional shape of the elastic member may correspond to the cross-sectional shape of the interior of the clamping-elastic element in the clamping position.

In some embodiments, the elastic member may be made of rubber or plastic.

In some embodiments, the elastic member and the clamping-elastic element may be constructed as one piece.

In some embodiments, the receiving structure may comprise a first groove for the compression structure, the first groove being respectively provided beside the two ends of the through opening in the turning section.

In some embodiments, the first receiving surface of the receiving structure for the compression structure may be constituted by the lower surface of the first groove, and the second receiving surface of the receiving structure for the compression structure may be constituted by the upper surface of the first groove and/or the upper surface of the through opening.

In some embodiments, when the second receiving surface of the receiving structure for the compression structure may be simultaneously constituted by the upper surface of the first groove and the upper surface of the through opening, the upper surface of the first groove and the upper surface of the through opening may be arranged flush when viewed laterally.

In some embodiments, the extension direction of the upper surface of the through opening and the extension direction of the lower surface of the through opening may form an acute angle with each other.

In some embodiments, the clamping-elastic element may have an expandable expansion structure, the expansion structure being configured to generate elastic potential energy due to the expansion of the expansion structure of the clamping-elastic element by the receiving structure in the clamping position, such that, in the unconstrained condition of the webbing, the clamping-elastic element resets from the clamping position to the release position based on the resilience force caused by the elastic potential energy of the expansion structure.

In some embodiments, when viewed in a side projection, the receiving structure may have an engaging portion that can be inserted into the expansion structure of the clamping-elastic element and has a cross-sectional geometric shape that cooperates with the cross-sectional geometric shape of the expansion structure of the clamping-elastic element such that in the clamping position the clamping-elastic element can on the one hand clamp the webbing, and on the other hand generate elastic potential energy for resetting based on the expansion of the expansion structure.

In some embodiments, the expansion structure may comprise a second opening portion, wherein the second opening portion opens substantially inward, wherein the second opening portion is configured to be further opened with the inserting of the engaging portion of the receiving structure when moving from the release position to the clamping position.

In some embodiments, the expansion structure of the clamping-elastic element may be configured to have a V-shaped cross-sectional geometric shape in the release position.

In some embodiments, the engaging portion may be configured to have a substantially wedge-shaped shape.

In some embodiments, the expansion structure may comprise at least one elastic arm protruding laterally from the main body of the clamping-elastic element.

In some embodiments, two or more elastic arms may be constructed, and at least part of the two or more elastic arms is constructed in pairs and symmetrically with respect to the center plane of the clamping-elastic element.

In some embodiments, the magnitude of the resilience force of the expansion structure can be adjusted by lengthening or shortening the length of the elastic arm.

In some embodiments, the clamping-elastic element, in addition to the expansion structure, may further has a guiding structure constituted by the main body of the clamping-elastic element, the guiding structure being configured to guide the clamping-elastic element during the movement of the clamping-elastic element between the clamping position and the release position.

In some embodiments, the receiving structure may comprise a second groove for guiding the guiding structure of the clamping-elastic element, the second groove being respectively provided beside the two ends of the through opening in the turning section.

In some embodiments, the upper surface and the lower surface of the second groove may be constructed to be substantially parallel to each other.

In some embodiments, the friction force between the guiding structure of the clamping-elastic element and the tongue body can be adjusted by adjusting the clearance between the upper surface and the lower surface of the second groove.

In some embodiments, the engaging portion of the receiving structure may be provided between the respective second grooves.

In some embodiments, the clamping-elastic element and the receiving structure may cooperate with each other such that, in the release position, the expansion structure is at least partially inserted by the engaging portion of the receiving structure in a pre-tensioned state.

In some embodiments, the edge of the clamping-elastic element in contact with the webbing may be provided with a chamfer.

In some embodiments, a single clamping-elastic element may be provided, through which the clamping and resetting functions can be simultaneously achieved.

According to a second aspect of the present disclosure, a seatbelt device for a motor vehicle is proposed, the seatbelt device may include a webbing, and the seatbelt device includes the lock tongue for a seatbelt according to the first aspect of the present disclosure, the lock tongue being capable of locking on the webbing in an emergency. Thus, when the seatbelt is locked, the webbing is clamped by the clamping-elastic element of the lock tongue, so that the webbing cannot slide freely in the torso section and the pelvic section under restraint conditions, thereby protecting the pelvic region and preventing excessive forward movement of the upper body. Furthermore, after the restraint condition ends, the clamping-elastic element can reset to the release position based on its resilience force, i.e., achieve self-resetting.

### Brief Description of Drawings

The present disclosure is explained in more detail below with reference to specific embodiments and the accompanying drawings. A brief description of the schematic drawings is as follows:
Fig. 1 is a schematic perspective view of a locking tongue according to a first embodiment of the present disclosure;
Fig. 2 is a schematic exploded view of the locking tongue in Fig. 1;
Fig. 3 is a cross-sectional view of the locking tongue in Fig. 1 in a through opening for a webbing, wherein a clamping-elastic element is in a release position;
Fig. 4 is another cross-sectional view of the locking tongue in Fig. 1 in the through opening for the webbing, wherein the clamping-elastic element is in a clamping position;
Fig. 5 is a cross-sectional view of the locking tongue in Fig. 3 taken at a first groove for the clamping-elastic element;
Fig. 6 is a cross-sectional view of the locking tongue in Fig. 4 taken at the first groove for the clamping-elastic element;
Fig. 7 is a schematic perspective view of the clamping-elastic element according to the present disclosure without an additional elastic member;
Fig. 8 is a schematic perspective view of the clamping-elastic element according to the present disclosure with the additional elastic member;
Fig. 9 is a cross-sectional view of a locking tongue according to a second embodiment of the present disclosure taken at a through opening for a webbing, wherein a clamping-elastic element is in a release position;
Fig. 10 is another cross-sectional view of the locking tongue according to the second embodiment of the present disclosure taken at the through opening for the webbing, wherein the clamping-elastic element is in a clamping position;
Fig. 11 is a cross-sectional view of the locking tongue in Fig. 9 taken at a first groove for the clamping-elastic element;
Fig. 12 is a cross-sectional view of the locking tongue in Fig. 10 taken at the first groove for the clamping-elastic element;
Fig. 13 is a cross-sectional view of a locking tongue according to a third embodiment of the present disclosure;
Fig. 14 is a schematic perspective view of a locking tongue according to a fourth embodiment of the present disclosure;
Fig. 15 is a cross-sectional view of the locking tongue in Fig. 14 taken at an engaging portion of a receiving structure, wherein the clamping-elastic element is in a release position;
Fig. 16 is another cross-sectional view of the locking tongue in Fig. 14 taken at the engaging portion of the receiving structure, wherein the clamping-elastic element is in a clamping position;
Fig. 17 is a schematic perspective view of a clamping-elastic element of the locking tongue according to the fourth embodiment of the present disclosure; and
Fig. 18 is a cross-sectional view of the clamping-elastic element in Fig. 17.

### Detailed Description of Drawings

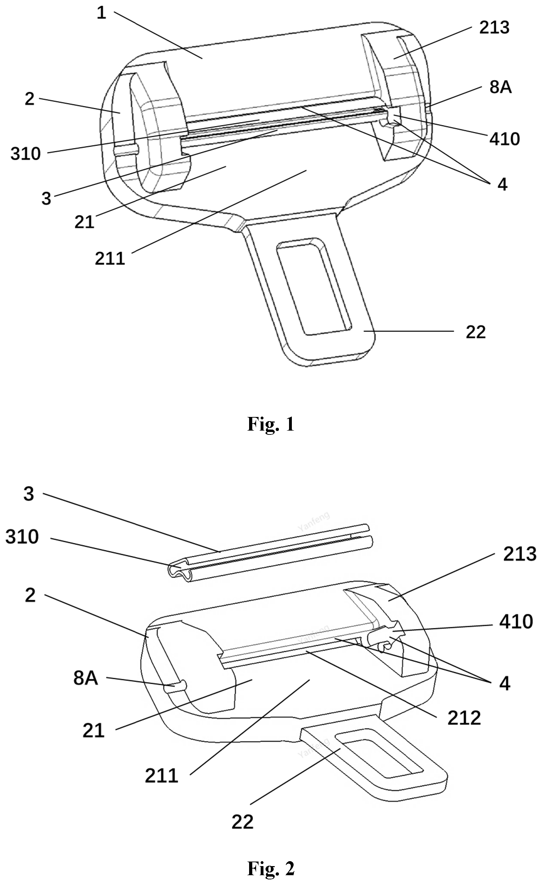

First, a locking tongue 1 according to a first embodiment of the present disclosure is described with reference to Figs. 1 to 6.

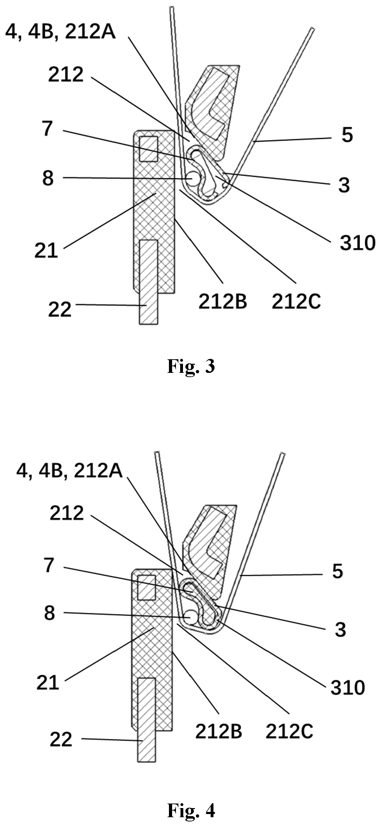

Figs. 1 and 2 respectively show a schematic perspective view and a schematic exploded view of the locking tongue 1 according to the first embodiment of the present disclosure. As shown in Figs. 1 and 2, the locking tongue 1 for a seat belt comprises a tongue body 2 and a clamping-elastic element 3, wherein the clamping-elastic element 3 is arranged on the tongue body 2. The tongue body 2 is connected to a webbing 5 of the seat belt in a slidable manner (see Figs. 3 and 4) and can be inserted into a seat belt buckle (not shown). The tongue body 2 comprises a turning section 21 configured for turning the webbing 5 of the seat belt (also referred to as a "webbing portion") and a buckle section 22 configured for being inserted into the seat belt buckle (also referred to as a "buckle portion"). The buckle section 22 is connected to the turning section 21, and the two may be integrally formed. The buckle section 22 extends downwardly from the turning section 21 and is elongated. The buckle section 22 can be inserted into the seat belt buckle, so that the seat belt webbing 5 can restrain a passenger on a seat.

The turning section 21 is substantially plate-shaped and may have chamfers at four corners. The turning section 21 may have a certain curved arc when viewed from the side. A through opening 212 is provided in a turning section body 211 of the turning section 21 for the webbing 5 of the seat belt to pass through. The through opening 212 may be elongated. The through opening 212 may be located substantially at the center of the turning section body 211.

As shown in Figs. 1 and 2, the clamping-elastic element 3 is arranged on the turning section 21 and can be received in a receiving structure 4 for the clamping-elastic element 3.

As shown in Figs. 1 to 6, the receiving structure 4 for receiving the clamping-elastic element 3 is constructed in the turning section 21. The receiving structure 4 is configured to enable the clamping-elastic element 3 to move in a guided manner at the receiving structure 4, and the receiving structure 4 cooperates with the clamping-elastic element 3 such that, in an unconstrained condition of the webbing 5, the clamping-elastic element 3 resets to a release position in a guided manner based on its own resilience force. Here, the receiving structure 4 comprises first grooves 410 respectively arranged beside two ends of the through opening 212 in the turning section 21 and a portion of the through opening 212 (here, an upper surface 212A of the through opening 212). At this time, an upper surface 410A of the first groove 410 and the upper surface 212A of the through opening 212 are arranged flush when viewed from the side. That is to say, the upper surface 410A of the first groove 410 and the upper surface 212A of the through opening 212 jointly constitute an upper surface of the receiving structure 4, and a lower surface 410B of the first groove 410 constitutes a lower surface of the receiving structure 4. The configuration of the receiving structure 4 will be described in detail later.

As shown in Figs. 1 and 2 as well as Figs. 5 and 6, protrusions 213 are respectively provided at two ends of the through opening 212 on the turning section 21, and the first groove 410 partially extends in the protrusions 213 and partially extends into the turning section body 211. The first groove 410 may extend such that the clamping-elastic element 3 can clamp the webbing 5 together with a lower surface 212B of the through opening 212 in the clamping position.

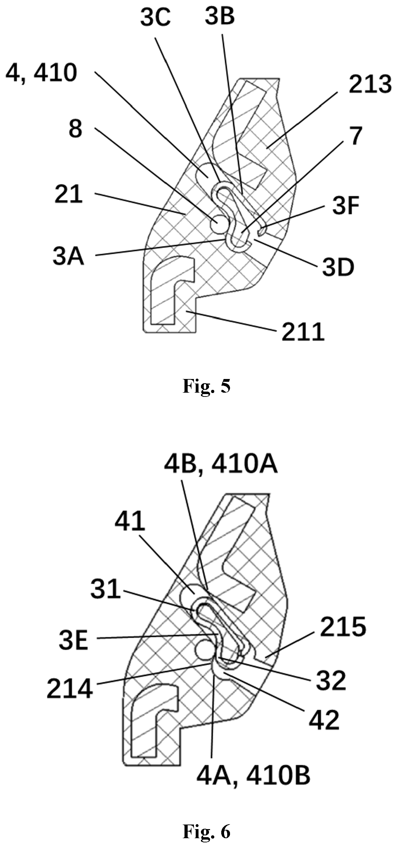

The working principle of the clamping-elastic element 3 of the locking tongue 1 according to the first embodiment in Fig. 1 is described below with reference to Figs. 3 to 6, wherein Figs. 3 and 4 respectively show cross-sectional views of the locking tongue 1 according to Fig. 1 taken at the through opening 212 for the webbing 5, with the clamping-elastic element 3 being in the release position and the clamping position respectively, and Figs. 5 and 6 respectively show cross-sectional views of the locking tongue 1 in Figs. 3 and 4 taken at the first groove 410 for the clamping-elastic element 3.

As shown in Figs. 3 to 6, the clamping-elastic element 3 has a compressible compression structure 310, wherein the compression structure 310 is configured to generate elastic potential energy due to compression of the compression structure 310 of the clamping-elastic element 3 by the webbing 5 in the clamping position, such that, in the unconstrained condition of the webbing 5, the clamping-elastic element 3 resets from the clamping position to the release position based on a resilience force caused by the elastic potential energy of the compression structure 310.

The clamping-elastic element 3 is movable between the release position shown in Fig. 3 and the clamping position shown in Fig. 4. In the release position as shown in Fig. 3, the webbing 5 can move freely. When moving from the release position to the clamping position, the clamping-elastic element 3 can move toward a lower surface 212B of the through opening 212 configured to clamp the webbing 5 together with the clamping-elastic element 3, such that, in the clamping position as shown in Fig. 4, the webbing 5 is clamped between the clamping-elastic element 3, in particular a front end surface 3C of the clamping-elastic element 3, and the lower surface 212B of the through opening 212. The lower surface 212B of the through opening 212 and the clamping-elastic element 3 form a webbing channel 212C for the seat belt webbing 5 to pass through. As shown in Fig. 3, when the clamping-elastic element 3 is in the release position, the lower surface 212B of the through opening 212 and the clamping-elastic element 3 are spaced apart by a distance, so that the webbing 5 can move freely in the webbing channel 212C. As shown in Fig. 4, when the clamping-elastic element 3 moves from the release position to the clamping position, the webbing 5 of the seat belt is clamped between the clamping-elastic element 3 and the lower surface 212B of the through opening 212, so that the webbing 5 is locked.

Different from the prior art, in the present disclosure, the clamping-elastic element 3 also functions as a reset member. In the first embodiment of the locking tongue 1, the clamping-elastic element 3 generates elastic potential energy due to compression of the compression structure 310 of the clamping-elastic element 3 by the webbing 5, such that, in the unconstrained condition, the clamping-elastic element 3 resets to the release position due to the elastic potential energy of the compression structure 310. The webbing 5 is released and can move freely in the webbing channel 212C.

The clamping-elastic element 3 is made of a metal with spring elasticity. In other embodiments, the clamping-elastic element 3 may also be made of a plastic with spring elasticity.

In order to ensure that the clamping-elastic element 3 reliably enters the clamping position and simultaneously resets to the release position by means of its own resilience force, when viewed in a side projection, the receiving structure 4 has such a cross-sectional geometric shape that cooperates with the cross-sectional geometric shape of the compression structure 310 of the clamping-elastic element 3 such that in the clamping position the clamping-elastic element 3 can on the one hand clamp the webbing 5, and on the other hand generate elastic potential energy for resetting based on the compression of the compression structure 310. For example, when the clamping-elastic element 3 can be opened, the cross-sectional geometric shape of the receiving structure 4 and the cross-sectional geometric shape of the compression structure 310 of the clamping-elastic element 3 may cooperate such that the clamping-elastic element 3 has a tendency to open outward in the clamping position to reset to the release position, so that, in the unconstrained condition of the webbing 5, the clamping-elastic element 3 can reset to the release position based on its resilience force.

As can be seen from Figs. 3 to 6, when viewed in a side projection, in the first embodiment of the locking tongue 1, the compression structure 310 of the clamping-elastic element 3 has a first surface 3A facing the webbing 5 undergoing turning and a second surface 3B facing away from the webbing 5 undergoing turning in the installed state. Correspondingly, the receiving structure 4 has a lower first receiving surface 4A for contacting and cooperating with the first surface 3A and an upper second receiving surface 4B for contacting and cooperating with the second surface 3B. In order to enable the clamping-elastic element 3 to smoothly reset to the release position in the unconstrained condition, the first receiving surface 4A and the second receiving surface 4B are constructed relative to each other such that the clamping-elastic element 3 will not be stuck in the receiving structure 4 under the action of the resilience force in the clamping position and can reset to the release position in the unconstrained condition of the webbing 5. In the first embodiment of the locking tongue 1, the first receiving surface 4A is constituted by the lower surface 410B of the first groove 410, and the second receiving surface 4B is constituted by the upper surface 410A of the first groove 410 and the upper surface 212A of the through opening 212. In other embodiments not shown, the second receiving surface 4B may also be constituted solely by the upper surface 410A of the first groove 410 or the upper surface 212A of the through opening 212. The upper surface 212A of the through opening 212 may extend over the entire through opening 212. In other embodiments not shown, the upper surface 212A of the through opening 212 may also extend over a portion of the through opening 212.

In order to enable the clamping-elastic element 3 to slide in the receiving structure 4 during movement between the release position and the clamping position, the second surface 3B of the compression structure 310 of the clamping-elastic element 3 and the second receiving surface 4B of the receiving structure 4 are configured such that the second surface 3B of the clamping-elastic element 3 can fit against the second receiving surface 4B of the receiving structure 4 and be flat in the fitting region. In this context, "flat" does not exclude the possibility of having a small arc, slight undulations, or uneven structures. Thus, when the clamping-elastic element 3 moves between the release position and the clamping position, the second surface 3B of the compression structure 310 of the clamping-elastic element 3 can slide along the second receiving surface 4B of the receiving structure 4.

The first receiving surface 4A and the second receiving surface 4B may be configured as shown in Figs. 5 and 6, wherein the first receiving surface 4A may have a curve, and the second receiving surface 4B may be flat. In addition, the first receiving surface 4A and the second receiving surface 4B may also be configured to be flat respectively. In order to enable the clamping-elastic element 3 to self-reset in the unconstrained condition of the webbing 5, when viewed in a side projection, the cross-sectional geometric shape of the receiving structure 4 may gradually or stepwise narrow from the outside to the inside. The extending directions of the first receiving surface 4A and the second receiving surface 4B may form an acute angle with each other substantially, and the acute angle is selected such that the clamping-elastic element 3 will not be self-locked in the receiving structure 4 under the action of the resilience force in the clamping position and can reset to the release position in the unconstrained condition of the webbing 5. Here, the extending directions of the first receiving surface 4A and the second receiving surface 4B may refer to an average extending direction, which may be applicable to the case where the receiving surfaces have curves. As shown in Figs. 3 to 6, when the clamping-elastic element 3 moves between the release position and the clamping position, the clamping-elastic element 3 can slide on the upper surface 410A of the first groove 410 and the upper surface 212A of the through opening 212.

Furthermore, as can be seen from Figs. 5 and 6, the compression structure 310 of the clamping-elastic element 3 comprises a front section 31 located at the front and a rear section 32 located at the rear in the insertion direction of the clamping-elastic element 3, the rear section 32 having a first opening portion 3D at a rear end opposite to the front end surface 3C for clamping the webbing 5. The first opening portion 3D opens substantially outward. Here, "toward the outside" refers to a direction opposite to the insertion direction of the clamping-elastic element 3. The first opening portion 3D can be at least partially closed during the movement of the clamping-elastic element 3 from the release position to the clamping position, so that the compression structure 310 of the clamping-elastic element 3 is compressed and thus generates elastic potential energy. The first opening portion 3D facilitates the compression of the compression structure 310 of the clamping-elastic element 3 when acted upon by the webbing 5.

The compression structure 310 of the clamping-elastic element 3 may be configured to have a substantially C-shaped shape in the release position as shown in Figs. 3 and 5.

When viewed in a side projection, the first surface 3A of the compression structure 310 of the clamping-elastic element 3 is configured to be recessed inwardly toward the interior of the compression structure 310 of the clamping-elastic element 3 with an arcuate shape, and thus has an arcuate section 3E. The arcuate section 3E of the clamping-elastic element 3 may substantially correspond in geometric structure to the first receiving surface 4A with a curve of the receiving structure 4. Thus, advantageous fitting of the clamping-elastic element 3 in the receiving structure 4, in particular in the first groove 410, can be achieved.

As shown in Figs. 5 and 6, when viewed in a side projection, the clamping-elastic element 3 is configured to have an L-shaped cross-sectional contour shape in the release position. Correspondingly, the receiving structure 4 has an L-shaped cross-sectional shape corresponding to the L-shaped cross-sectional contour shape of the clamping-elastic element 3 and has an inner receiving section 41 and an outer receiving section 42. At least in the release position, the front section 31 of the clamping-elastic element 3 is received in the inner receiving section 41 of the receiving structure 4, and the rear section 32 of the clamping-elastic element 3 is received in the outer receiving section 42 of the receiving structure 4. Preferably, the front section 31 and the rear section 32 of the clamping-elastic element 3 are received in the inner receiving section 41 and the outer receiving section 42 of the receiving structure 4 respectively in a substantially fitting manner.

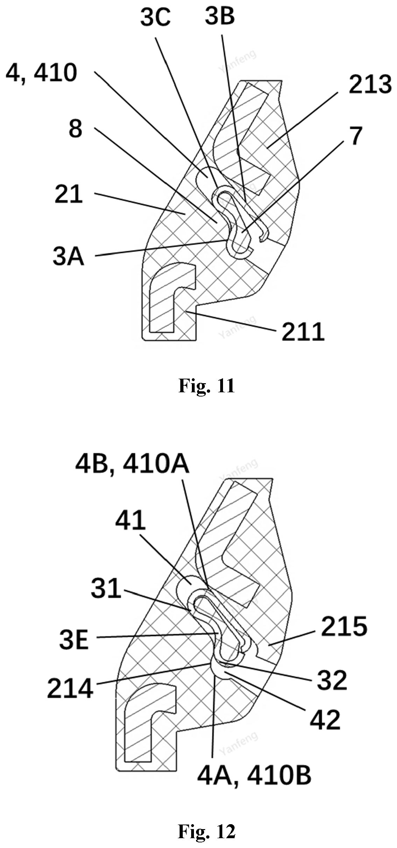

At the interior of a curved region of the L-shaped cross-sectional shape of the receiving structure 4, the turning section 21 has an arched portion 214. The arched portion 214 is configured to enable the clamping-elastic element 3 to slide on the arched portion 214 with its arcuate first surface 3A when moving between the release position and the clamping position, so that the clamping-elastic element 3 slides into the inner receiving section 41 of the receiving structure 4 when clamping the webbing 5 or slides out of the inner receiving section 41 based on the resilience force in the unconstrained condition of the webbing 5. Since a pin rod 8 for providing support for the clamping-elastic element 3 between the release position and the clamping position is provided in the first embodiment of the present disclosure, and the pin rod 8 partially overlaps with the arched portion 214 when viewed in cross-section, only a part of the arched portion 214 can be seen in Figs. 5 and 6. For a more complete structure of the arched portion 214, reference may be made to Figs. 11 and 12 relating to the second embodiment in which the pin rod 8 is not provided.

The design of the first opening portion 3D of the clamping-elastic element 3 is also important for the clamping and resetting effects of the clamping-elastic element 3. The first opening portion 3D of the clamping-elastic element 3 is designed such that, when the clamping-elastic element 3 is subjected to a force, the portions at both ends of the first opening portion 3D of the clamping-elastic element 3 abut against each other and thus the first opening portion 3D is completely closed, so that the clamping-elastic element 3 can clamp the webbing 5 at least partially with its front end surface 3C on the one hand, and can remain at least partially in the outer receiving section 42 of the receiving structure 4 with its rear section 32 on the other hand, and when the clamping-elastic element 3 is in an unloaded state, the clamping-elastic element 3 can reset to the release position based on the resilience force when the webbing 5 is in the unconstrained condition. The design of the first opening portion 3D affects the degree of penetration of the clamping-elastic element 3 into the inner receiving section 41. Through the design of the first opening portion 3D according to the present disclosure, in the clamping position of the clamping-elastic element 3, under the condition that the first opening portion 3D is completely closed, the center of the arcuate section 3E of the compression structure 310 of the clamping-elastic element 3 can extend into the inner receiving section 41 of the receiving structure 4, and at least a rear portion of the arcuate section 3E of the compression structure 310 of the clamping-elastic element 3 remains in the outer receiving section 42 of the receiving structure 4.

In order to achieve pre-tensioning of the clamping-elastic element 3 in the release position, the dimensions of the receiving structure 4 in the outer receiving section 42 and the dimensions of the clamping-elastic element 3 in the rear section 32 are designed such that the clamping-elastic element 3 is received in the receiving structure 4 in a pre-tensioned state in the release position. For this purpose, as can be seen in Figs. 5 and 6, a hook-bent portion 215 is provided in the turning section 21 at the outer edge of the receiving structure 4, in particular the outer receiving section 42, and two legs 3F of the rear section 32 of the clamping-elastic element 3 respectively abut against the hook-bent portion 215 in the release position.

In order to prevent over-clamping of the clamping-elastic element 3, a rod-shaped pin rod 8 is provided in the turning section 21. The pin rod 8 is configured to provide support for the compression structure 310 of the clamping-elastic element 3 between the release position and the clamping position, and to limit over-clamping by limiting the position of the compression structure 310 of the clamping-elastic element 3 when the force on the webbing 5 rises excessively. The pin rod 8 can be installed through a mounting hole 8A provided at a side edge of the turning section 21 of the tongue body 2 and is in interference fit with the mounting hole 8A. The mounting hole 8A can be seen in Figs. 1 and 2. As shown in Figs. 3 to 6, the pin rod 8 is arranged in the turning section 21 such that the compression structure 310 of the clamping-elastic element 3 at least partially rests against the pin rod 8 with its arcuate section 3E in the release position, and thus the pin rod 8 at least partially engages into the arcuate section 3E of the compression structure 310 of the clamping-elastic element 3. For example, the compression structure 310 of the clamping-elastic element 3 can rest against the pin rod 8 with a central portion of its arcuate section 3E in the release position. Furthermore, the pin rod 8 is configured to protrude outward relative to the first receiving surface 4A of the receiving structure 4 when viewed in a side projection. Thus, with the pin rod 8, the clamping-elastic element 3 reaches its clamping position earlier than without the pin rod 8. In the present embodiment, the pin rod 8 has a circular cross-sectional shape. In other embodiments, the pin rod 8 may also have an elliptical or oval cross-sectional shape.

In order to increase the elasticity of the clamping-elastic element 3, as shown in Figs. 3 to 6, an additional elastic member 7 may be provided inside the clamping-elastic element 3. As shown in Figs. 4 and 6, the cross-sectional shape of the elastic member 7 substantially corresponds to the cross-sectional shape of the interior of the clamping-elastic element 3 in the clamping position. Here, the cross-sectional shape of the elastic member 7 may have a deviation of less than 10%, preferably 20%, from the cross-sectional shape of the interior of the clamping-elastic element 3 in the clamping position. The elastic member 7 and the clamping-elastic element 3 are constructed as one piece, for example, constructed as one piece by overmolding. The elastic member 7 is made of rubber or plastic.

In order to better bear the force transmitted on the webbing 5 and to avoid wear of the webbing 5 after multiple uses, the edge of the clamping-elastic element 3 in contact with the webbing 5 is provided with a chamfer.

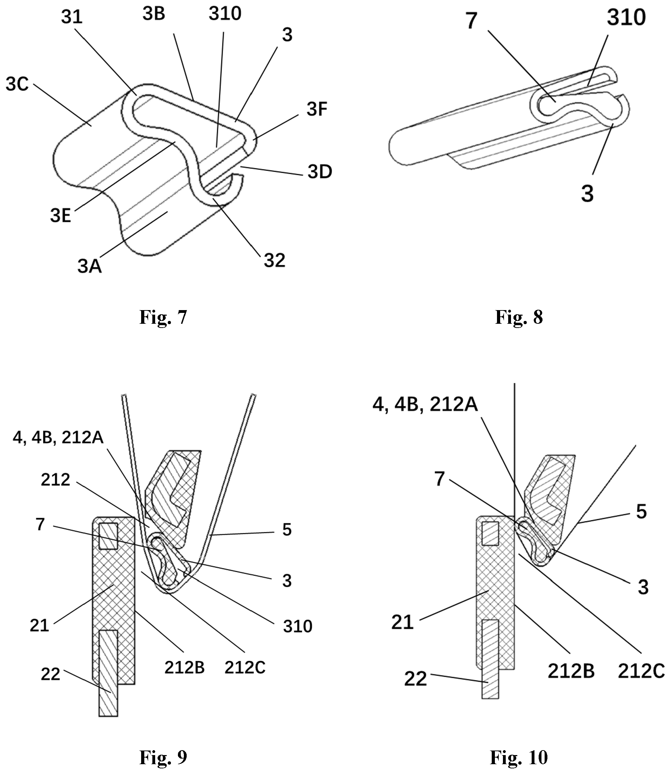

The structure of the clamping-elastic element 3 and its additional elastic member 7 can be better seen in Figs. 7 and 8. The edge of the clamping-elastic element 3 in contact with the webbing 5 with a chamfer, that is, the front edge with the front end surface 3C, can be seen therefrom. Furthermore, the opening portion 3D of the clamping-elastic element 3, the flat second surface 3B, the first surface 3A together with the arcuate section 3E, the legs 3F, and the additional elastic member 7 received in the clamping-elastic element 3 can also be seen.

The structure of the locking tongue 1 according to the second embodiment of the present disclosure is described below with reference to Figs. 9 to 12. Compared with the first embodiment, the locking tongue 1 according to the second embodiment is not provided with the pin rod 8. In other respects, the locking tongue 1 according to the first embodiment and the locking tongue 1 according to the second embodiment are substantially the same, and therefore reference may be made herein to the above description for components other than the pin rod 8.

As shown in Figs. 10 and 12, in the absence of the pin rod 8, the clamping-elastic element 3 can substantially completely clamp the webbing 5 on the lower surface 212B of the through opening 212. The difference between the presence and the absence of the pin rod 8 can be more clearly seen by comparing Figs. 4 and 6 relating to the first embodiment with Figs. 10 and 12 relating to the second embodiment.

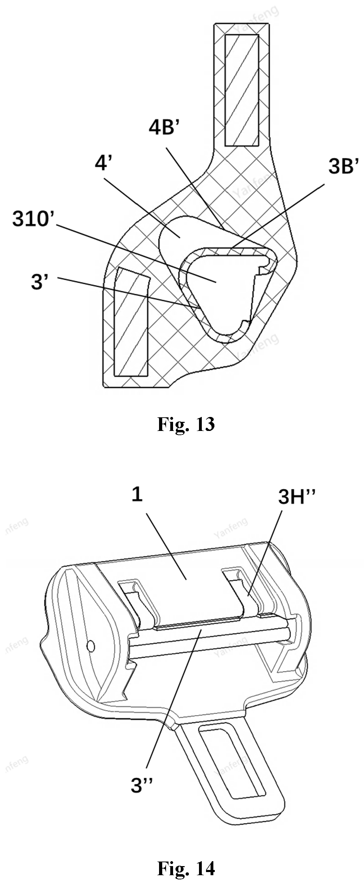

Next, the structure of the locking tongue 1 according to the third embodiment of the present disclosure is described with reference to Fig. 13. As shown in Fig. 13, the compression structure 310' of the clamping-elastic element 3' of the locking tongue 1 of the third embodiment is configured to have a substantially V-shaped shape in the release position. This is achieved by the cooperation of the clamping-elastic element 3' itself and the corresponding cross-sectional geometric shape of the corresponding receiving structure 4'. As shown in Fig. 13, in the release position, the second surface 3B' of the clamping-elastic element 3' may initially not fit against the second receiving surface 4B' of the receiving structure 4'. The fitting of the second surface 3B' of the clamping-elastic element 3' against the second receiving surface 4B' of the receiving structure 4' may occur in an intermediate position between the release position and the clamping position, or may occur in the clamping position. In other respects, reference may be made to the description of the first and second embodiments of the locking tongue 1.

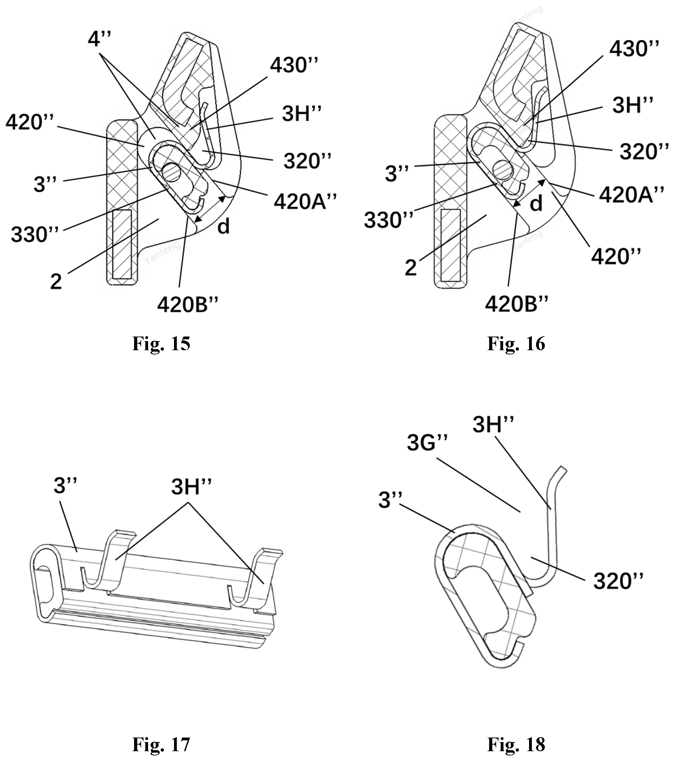

Subsequently, the structure of the locking tongue 1 according to the fourth embodiment of the present disclosure is described with reference to Figs. 14 to 18. The clamping-elastic element 3'' of the locking tongue 1 of the fourth embodiment shown in Fig. 15 is in the release position, while the clamping-elastic element 3" shown in Fig. 16 is in the clamping position.

Different from the clamping-elastic elements of the locking tongues 1 of the first to third embodiments, in the locking tongue 1 of the fourth embodiment, the clamping-elastic element 3" may have an expandable expansion structure 320". The expansion structure 320" in the release position is configured to generate elastic potential energy due to the expansion of the expansion structure 320" of the clamping-elastic element 3" by the receiving structure 4" in the clamping position, such that, in the unconstrained condition of the webbing 5, the clamping-elastic element 3" resets from the clamping position to the release position based on the resilience force caused by the elastic potential energy of the expansion structure 320". In order to be able to expand the expansion structure 320" to generate the resilience force, when viewed in a side projection, the receiving structure 4" of the locking tongue 1 of the fourth embodiment has such an engaging portion 430" that can be inserted into the expansion structure 320" of the clamping-elastic element 3" and has such a cross-sectional geometric shape that cooperates with the cross-sectional geometric shape of the expansion structure 320" of the clamping-elastic element 3" such that the clamping-elastic element 3" can clamp the webbing on the one hand in the clamping position, and on the other hand enables the clamping-elastic element 3" to generate elastic potential energy for resetting based on the expansion of the expansion structure 320".

The expansion structure 320" of the clamping-elastic element 3" includes a second opening portion 3G", and the second opening portion 3G" opens substantially inward. Here, "inward" means toward the insertion direction of the clamping-elastic element 3". The expansion structure 320" of the clamping-elastic element 3" is configured to have a V-shaped cross-sectional geometric shape in the release position. The V-shaped cross-sectional geometric shape also opens inward. As can be clearly seen from Figs. 14 to 18, the expansion structure 320" includes elastic arms 3H" protruding laterally from the main body of the clamping-elastic element 3". Two elastic arms 3H" are constructed here. The two elastic arms 3H" are constructed in pairs and symmetrically with respect to the center plane of the clamping-elastic element 3". In other embodiments, only one elastic arm 3H" may be constructed. This one elastic arm 3H" is preferably located on the center plane of the clamping-elastic element 3". In other embodiments, more than two elastic arms 3H" may also be constructed. Among the more than two elastic arms 3H", preferably an even number of elastic arms 3H" may be constructed in pairs and symmetrically with respect to the center plane of the clamping-elastic element 3". In order to obtain an appropriate resilience force for returning the clamping-elastic element 3" to the release position, the magnitude of the resilience force of the expansion structure 320" can be adjusted by lengthening or shortening the length of the elastic arms 3H".

In addition to the elastic arms 3H", the expansion structure 320" may also be provided with other forms of protruding resilient structures, for example, elastic strips extending over a larger portion of the clamping-elastic element 3".

The engaging portion 430" is configured to have a substantially wedge-shaped shape. The clamping-elastic element 3" and the receiving structure 4" cooperate with each other such that, in the release position, the expansion structure 320" is at least partially inserted by the engaging portion 430" of the receiving structure 4" in a pre-tensioned state. The second opening portion 3G" can be further opened during the movement from the release position to the clamping position, as the engaging portion 430" of the receiving structure 4" is inserted. Thus, the expansion structure 320" is also further opened with the inserting of the engaging portion 430" of the receiving structure 4" and thus generates a greater resilience force.

Furthermore, as shown in Figs. 14 to 16, in addition to the expansion structure 320", the clamping-elastic element 3" further has a guiding structure 330" constituted by the main body of the clamping-elastic element 3". The guiding structure 330" is configured to guide the clamping-elastic element 3" during the movement of the clamping-elastic element 3" between the clamping position and the release position. For this purpose, the receiving structure 4" includes second grooves 420" for guiding the guiding structure 330" of the clamping-elastic element 3", and the second grooves 420" are respectively arranged beside the two ends of the through opening in the turning section. The engaging portion 430" of the receiving structure 4"is arranged between the second grooves 420".

The elastic arms 3H" are expanded, that is, in a pre-tensioned state, already in the release position in the installed state. In the clamping position, the clamping-elastic element 3" can move upward along the lateral second grooves 420" to a position close to the upper edge. Due to the constraint of the engaging portion 430" on the tongue body 2, the end regions of the elastic arms 3H" are further stretched, so that the elastic potential energy increases. When the force on the webbing 5 decreases, the resilience force causes the clamping-elastic element 3" to return to the release position along the second grooves 420", and the elastic arms 3H" reset simultaneously.

As shown in Figs. 15 and 16, the upper surface 420A" and the lower surface 420B" of the second groove 420" are constructed to be substantially parallel to each other. The friction force between the guiding structure 330" of the clamping-elastic element 3" and the tongue body 2 can be adjusted by adjusting the clearance d between the upper surface 420A" and the lower surface 420B" of the second groove 420".

In an embodiment not shown, the clamping-elastic element may simultaneously have a compressible compression structure and an expandable expansion structure. The compression structure and the expansion structure are respectively configured to generate elastic potential energy due to the compression of the compression structure of the clamping-elastic element by the webbing and due to the expansion of the expansion structure of the clamping-elastic element by the receiving structure in the clamping position, such that, in the unconstrained condition of the webbing, the clamping-elastic element resets from the clamping position to the release position based on the resilience force caused by the elastic potential energy of the compression structure and the expansion structure. The compression structure and the expansion structure may be constructed as the compression structure and the expansion structure described above, respectively. The compression structure may be constructed at a lower portion of the clamping-elastic element, and the expansion structure may be constructed at an upper portion of the clamping-elastic element. The compression structure and the expansion structure may also be constructed in an integrated manner.

It should be noted that the terminology used herein is for the purpose of describing particular aspects only and is not intended to be limiting of the invention. As used herein, the singular forms "a", "an" and "the" are intended to include the plural forms as well, unless the context clearly dictates otherwise. It will be further understood that the terms "comprises" and "includes" and other similar terms, when used in the specification, specify the presence of stated operations, elements and/or components, but do not preclude the presence or addition of one or more other operations, elements, components and/or combinations thereof. As used herein, the term "and/or" includes any and all combinations of one or more of the associated listed items. In the description of the accompanying drawings, like reference numerals always refer to like elements.

The thicknesses of elements in the accompanying drawings may be exaggerated for clarity. It will also be understood that when an element is referred to as being "on", "coupled to", or "connected to" another element, it can be directly formed on, coupled to, or connected to the other element, or one or more intervening elements may be present. In contrast, when the expressions "directly on", "directly coupled to", and "directly connected to" are used herein, it means that there are no intervening elements. Other words used to describe the relationship between elements should be interpreted in a like fashion, e.g., "between" versus "directly between", "attached" versus "directly attached", "adjacent" versus "directly adjacent", etc.

The terms such as "top", "bottom", "above", "below", "upper", "lower", etc., are used herein to describe a relationship of one element, layer, or region relative to another element, layer, or region as illustrated in the accompanying drawings. It will be understood that these terms are intended to encompass other orientations of the device in addition to the orientation depicted in the accompanying drawings.

It will be understood that, although the terms "first", "second", etc., may be used herein to describe various elements, these elements should not be limited by these terms. These terms are only used to distinguish one element from another. Thus, a first element could be termed a second element without departing from the teachings of the present disclosure.

It is also contemplated that all exemplary embodiments disclosed herein can be combined with each other arbitrarily. Furthermore, all individual technical features in the present application can be combined with each other arbitrarily, as long as the combined technical features are not contradictory to each other. All technically feasible combinations of features are technical contents described in the present application.

## Claims

1. A locking tongue (1) for a seat belt, the locking tongue comprising a tongue body (2), the tongue body having a buckle section (22) configured for being inserted into a seat belt buckle and a turning section (21) configured for turning a webbing (5) of the seat belt, the turning section having a through opening (212) for the webbing to pass through, **characterized in that** a clamping-elastic element (3, 3', 3") is provided on the turning section, the clamping-elastic element being movable between a release position and a clamping position, in the release position the webbing being able to move freely, in the clamping position the webbing being clamped between the clamping-elastic element and a lower surface (212B) of the through opening configured for clamping the webbing together with the clamping-elastic element, wherein the clamping-elastic element is configured to be able to reset from the clamping position to the release position through its own resilience force in the unconstrained condition of the webbing.

2. The locking tongue according to claim 1, **characterized in that** the turning section has a receiving structure (4, 4', 4") for receiving the clamping-elastic element, the receiving structure being configured for enabling the clamping-elastic element to move in a guided manner at the receiving structure, and the receiving structure cooperating with the clamping-elastic element such that the clamping-elastic element resets to the release position in a guided manner based on its own resilience force in the unconstrained condition of the webbing.

3. The locking tongue according to claim 2, **characterized in that** the clamping-elastic element (3, 3') has a compressible compression structure (310, 310'), the compression structure being configured for generating elastic potential energy due to the compression of the compression structure of the clamping-elastic element by the webbing in the clamping position, such that the clamping-elastic element resets from the clamping position to the release position based on the resilience force caused by the elastic potential energy of the compression structure in the unconstrained condition of the webbing.

4. The locking tongue according to claim 3, **characterized in that**, when viewed in a side projection, the receiving structure has such a cross-sectional geometric shape that cooperates with the cross-sectional geometric shape of the compression structure of the clamping-elastic element such that in the clamping position the clamping-elastic element can on the one hand clamp the webbing and on the other hand generate elastic potential energy for resetting based on the compression of the compression structure.

5. The locking tongue according to claim 4, **characterized in that**, when viewed in a side projection, the compression structure of the clamping-elastic element has a first surface (3A) facing the turning webbing and a second surface (3B) facing away from the turning webbing in the installed state, the receiving structure correspondingly having a lower first receiving surface (4A) for contacting and cooperating with the first surface and an upper second receiving surface (4B) for contacting and cooperating with the second surface, the first receiving surface and the second receiving surface being constructed relative to each other such that the clamping-elastic element will not be stuck in the receiving structure under the action of the resilience force in the clamping position and can reset to the release position in the unconstrained condition of the webbing.

6. The locking tongue according to claim 5, **characterized in that** the second surface of the compression structure of the clamping-elastic element and the second receiving surface of the receiving structure are configured such that the second surface of the compression structure of the clamping-elastic element can fit against the second receiving surface of the receiving structure and be flat in the fitting region, so that when the clamping-elastic element moves between the release position and the clamping position, the second surface of the compression structure of the clamping-elastic element can slide along the second receiving surface of the receiving structure.

7. The locking tongue according to claim 5, **characterized in that** the first receiving surface is configured with a curve and the second receiving surface is flat, or both the first receiving surface and the second receiving surface are flat; and/or
when viewed in a side projection, the cross-sectional geometric shape of the receiving structure gradually or stepwise narrows from outside to inside.

8. The locking tongue according to claim 5, **characterized in that** the compression structure of the clamping-elastic element comprises a front section (31) located at the front and a rear section (32) located at the rear in the insertion direction of the clamping-elastic element, the rear section comprising a first opening portion (3D) at a rear end opposite to a front end surface (3C) for clamping the webbing, wherein the first opening portion opens substantially outward, wherein the first opening portion is able to be at least partially closed during the movement of the clamping-elastic element from the release position to the clamping position, so that the compression structure of the clamping-elastic element is compressed and thus generates elastic potential energy.

9. The locking tongue according to claim 8, **characterized in that** the compression structure of the clamping-elastic element is configured to have a V-shaped or C-shaped cross-sectional geometric shape in the release position.

10. The locking tongue according to claim 8, **characterized in that**, when viewed in a side projection, the first surface of the compression structure of the clamping-elastic element is configured to be recessed inwardly toward the interior of the compression structure of the clamping-elastic element with an arcuate shape.

11. The locking tongue according to claim 10, **characterized in that**, when viewed in a side projection, the clamping-elastic element is configured to have an L-shaped cross-sectional contour shape in the release position, the receiving structure correspondingly has an L-shaped cross-sectional shape corresponding to the L-shaped cross-sectional contour shape of the clamping-elastic element and has an inner receiving section (41) and an outer receiving section (42), wherein, at least in the release position, the front section of the clamping-elastic element is received in the inner receiving section of the receiving structure, and the rear section of the clamping-elastic element is received in the outer receiving section of the receiving structure.

12. The locking tongue according to claim 11, **characterized in that**, at the interior of a curved region of the L-shaped cross-sectional shape of the receiving structure, the turning section has an arched portion, the arched portion being configured to enable the clamping-elastic element to slide on the arched portion with its arcuate first surface when moving between the release position and the clamping position, so that the clamping-elastic element slides into the inner receiving section of the receiving structure when clamping the webbing or slides out of the inner receiving section based on a resilience force in an unconstrained condition of the webbing.

13. The locking tongue according to claim 11, **characterized in that**, the first opening portion of the clamping-elastic element is designed such that, when the clamping-elastic element is subjected to force, the portions at both ends of the first opening portion of the clamping-elastic element abut against each other and thus the first opening portion is completely closed, so that the clamping-elastic element can clamp the webbing at least partially with its front end surface on the one hand, and can remain at least partially in the outer receiving section of the receiving structure with its rear section on the other hand, and when the clamping-elastic element is in an unloaded state, the clamping-elastic element can reset to the release position based on the resilience force in the unconstrained condition of the webbing.

14. The locking tongue according to claim 13, **characterized in that**, in the clamping position of the clamping-elastic element, with the first opening portion completely closed, the center of the arcuate section (3E) of the compression structure of the clamping-elastic element can extend into the inner receiving section of the receiving structure, and at least a rear portion of the arcuate section of the compression structure of the clamping-elastic element remains in the outer receiving section of the receiving structure.

15. The locking tongue according to claim 11, **characterized in that**, the dimensions of the receiving structure in the outer receiving section and the dimensions of the compression structure of the clamping-elastic element in the rear section are designed such that the clamping-elastic element is received in the receiving structure in a pre-tensioned state in the release position.

16. The locking tongue according to claim 15, **characterized in that**, a hook-bent portion (3F) is provided at an outer edge of the receiving structure in the turning section, and two legs of the rear section of the clamping-elastic element can respectively abut against the hook-bent portion in the release position.

17. The locking tongue according to claim 10, **characterized in that**, a rod-shaped pin rod is provided in the turning section, the pin rod (8) being configured to provide support for the compression structure of the clamping-elastic element between the release position and the clamping position, and to limit over-clamping by limiting the position of the compression structure of the clamping-elastic element when the force on the webbing rises excessively.

18. The locking tongue according to claim 17, **characterized in that**, the pin rod can be installed through a mounting hole (8A) provided at a side edge of the turning section of the tongue body and is in interference fit with the mounting hole.

19. The locking tongue according to claim 17, **characterized in that**, the pin rod has a circular, elliptical, or oval cross-sectional shape.

20. The locking tongue according to claim 17, **characterized in that**, the pin rod is arranged in the turning section such that the compression structure of the clamping-elastic element at least partially rests against the pin rod with its arcuate section in the release position, and thus the pin rod at least partially engages into the arcuate section of the compression structure of the clamping-elastic element.

21. The locking tongue according to claim 20, **characterized in that**, the compression structure of the clamping-elastic element rests against the pin rod with a central portion of its arcuate section in the release position.

22. The locking tongue according to claim 17, **characterized in that**, the pin rod is configured to protrude outward relative to the first receiving surface of the receiving structure when viewed in a side projection, such that, with the pin rod, the clamping-elastic element reaches its clamping position earlier than without the pin rod.

23. The locking tongue according to claim 1, **characterized in that**, the clamping-elastic element is made of metal or plastic with spring elasticity.

24. The locking tongue according to claim 8, **characterized in that**, an additional elastic member (7) is provided inside the clamping-elastic element to increase the elasticity of the clamping-elastic element.

25. The locking tongue according to claim 24, **characterized in that**, the cross-sectional shape of the elastic member corresponds to the cross-sectional shape of the interior of the clamping-elastic element in the clamping position.

26. The locking tongue according to claim 24, **characterized in that**, the elastic member is made of rubber or plastic.

27. The locking tongue according to claim 24, **characterized in that**, the elastic member and the clamping-elastic element are constructed as one piece.

28. The locking tongue according to claim 5, **characterized in that**, the receiving structure comprises a first groove (410) for the compression structure, the first groove being respectively provided beside the two ends of the through opening in the turning section.

29. The locking tongue according to claim 28, **characterized in that**, the first receiving surface (4A) of the receiving structure (4) for the compression structure is constituted by the lower surface (410B) of the first groove (410), and the second receiving surface (4B) of the receiving structure (4) for the compression structure is constituted by the upper surface (410A) of the first groove (410) and/or the upper surface (212A) of the through opening (212).

30. The locking tongue according to claim 29, **characterized in that**, when the second receiving surface of the receiving structure for the compression structure is simultaneously constituted by the upper surface of the first groove and the upper surface of the through opening, the upper surface of the first groove and the upper surface of the through opening are arranged flush when viewed laterally.

31. The locking tongue according to claim 29, **characterized in that**, the extension direction of the upper surface of the through opening and the extension direction of the lower surface of the through opening form an acute angle with each other.

32. The locking tongue according to claim 2, **characterized in that**, the clamping-elastic element (3") has an expandable expansion structure (320"), the expansion structure being configured to generate elastic potential energy due to the expansion of the expansion structure of the clamping-elastic element by the receiving structure in the clamping position, such that, in the unconstrained condition of the webbing, the clamping-elastic element resets from the clamping position to the release position based on the resilience force caused by the elastic potential energy of the expansion structure.

33. The locking tongue according to claim 32, **characterized in that**, when viewed in a side projection, the receiving structure (4") has an engaging portion (430") that can be inserted into the expansion structure of the clamping-elastic element and has a cross-sectional geometric shape that cooperates with the cross-sectional geometric shape of the expansion structure of the clamping-elastic element such that in the clamping position the clamping-elastic element can on the one hand clamp the webbing, and on the other hand generate elastic potential energy for resetting based on the expansion of the expansion structure.

34. The locking tongue according to claim 33, **characterized in that**, the expansion structure comprises a second opening portion (3G"), wherein the second opening portion opens substantially inward, wherein the second opening portion is configured to be further opened with the inserting of the engaging portion of the receiving structure when moving from the release position to the clamping position.

35. The locking tongue according to claim 33, **characterized in that**, the expansion structure of the clamping-elastic element is configured to have a V-shaped cross-sectional geometric shape in the release position.

36. The locking tongue according to claim 33, **characterized in that**, the engaging portion is configured to have a substantially wedge-shaped shape.

37. The locking tongue according to claim 33, **characterized in that**, the expansion structure comprises at least one elastic arm (3H") protruding laterally from the main body of the clamping-elastic element.

38. The locking tongue according to claim 37, **characterized in that**, two or more elastic arms are constructed, and at least part of the two or more elastic arms is constructed in pairs and symmetrically with respect to the center plane of the clamping-elastic element.

39. The locking tongue according to claim 37, **characterized in that**, the magnitude of the resilience force of the expansion structure can be adjusted by lengthening or shortening the length of the elastic arm.

40. The locking tongue according to claim 33, **characterized in that**, the clamping-elastic element, in addition to the expansion structure, further has a guiding structure (330") constituted by the main body of the clamping-elastic element, the guiding structure being configured to guide the clamping-elastic element during the movement of the clamping-elastic element between the clamping position and the release position.

41. The locking tongue according to claim 40, **characterized in that**, the receiving structure comprises a second groove (420") for guiding the guiding structure of the clamping-elastic element, the second groove being respectively provided beside the two ends of the through opening in the turning section.

42. The locking tongue according to claim 41, **characterized in that**, the upper surface and the lower surface of the second groove are constructed to be substantially parallel to each other.

43. The locking tongue according to claim 41, **characterized in that**, the friction force between the guiding structure of the clamping-elastic element and the tongue body can be adjusted by adjusting the clearance (d) between the upper surface (420A") and the lower surface (420B") of the second groove.

44. The locking tongue according to claim 41, **characterized in that**, the engaging portion of the receiving structure is provided between the respective second grooves.

45. The locking tongue according to claim 33, **characterized in that**, the clamping-elastic element and the receiving structure cooperate with each other such that, in the release position, the expansion structure is at least partially inserted by the engaging portion of the receiving structure in a pre-tensioned state.

46. The locking tongue according to claim 1, **characterized in that**, the edge of the clamping-elastic element in contact with the webbing is provided with a chamfer.

47. The locking tongue according to claim 1, **characterized in that**, a single clamping-elastic element is provided, through which the clamping and resetting functions can be simultaneously achieved.

48. A seatbelt device for a motor vehicle, the seatbelt device comprising a webbing, **characterized in that**, the seatbelt device comprises the locking tongue for a seatbelt according to any one of claims 1 to 47, and the locking tongue can be locked on the webbing in an emergency situation.
